# EUROPEAN PATENT APPLICATION

(11) **EP 2 796 435 A1**
(43) Date of publication of application: **29.10.2014**
(21) Application number: 13193396.2
(22) Date of filing: 19.11.2013
(51) Int. Cl.: C04B 28/04, C04B 40/06

(54) **Dry mixture for producing cellular fibre-reinforced concrete**

(30) Priority: 26.04.2013 RU 2013119728
(71) Applicant: Yastremskiy, Evgeniy Nikolaevich, St. Petersburg 195196 (RU); Emelianov, Ilia Aleksandrovich, Poselok Kovrovo 238553 (RU)
(72) Inventor: Yastremskiy, Evgeniy Nikolaevich, St. Petersburg 195196 (RU); Emelianov, Ilia Aleksandrovich, Poselok Kovrovo 238553 (RU)
(74) Representative: Sloboshanin, Sergej

(57) **Abstract**

The invention relates to the field of construction materials and can be used for producing naturally hardening non-autoclaved cellular fibre-reinforced concrete. The non-autoclaved cellular fibre-reinforced concrete is produced from a raw mixture comprising, in percent: Portland cement: 5.2-75.198%, mineral filler 20-70%, microsilica 2-10%, superplasticizer 0.6-3%, modified zeolite admixture 2-10%, polypropylen fibre 0.10-0.15%, composite pore-forming agent 0.002-0.65%, hydrophobizing agent 0.1-1%. The superplasticizer and the hydrophobizing agent are calculated from the cement mass. The above mixture is subjected to a stage of preliminary mixing and is ground and activated in mechanical activators, subsequently it is bagged into 25 kg bags, into a big bag type package, and onto cement carriers. The technical result is an increase in strength, frost resistance, and an acceleration of the hardening of the cellular fibre-reinforced concrete at reduced specific weight, a reduction of shrinkage, energy saving, the possibility of use at construction sites according to the principle of "simply dilute with water".

## Description

The invention relates to the field of building materials and can be used for producing building materials, namely, non-autoclaved cellular fibre-reinforced concrete for a wide range of applications, and for producing individual products and monoliths. A raw mixture for producing cellular concrete is known, containing Portland cement, lime, aluminium powder, chlorinated lime and water (Author's Certificate USSR 1491857).

A raw mixture for producing naturally hardening non-autoclaved cellular concrete is known, consisting of cement, chlorinated lime or sodium, microsilica, C-3 superplasticizer, blowing agent and water (RU 2120926 C1). A raw mixture for producing non-reinforced, non-autoclaved wall blocks consisting of coal-tar ash, cement, lime, gypsum, aluminium powder and water is known (RU 2077520 C1).

A method for producing a light non-autoclaved concrete from a raw mixture containing coal-tar ash, Portland cement and aluminium powder is known. (Author's certificate 1477722, class C04 B 38/02,1989.)

All the above raw mixtures and production methods include one or a combination of methods: autoclaving (autoclaved concrete), steam-curing (non-autoclaved concrete), and vibration (vibration concrete). The result of all the above-listed methods is that the cellular concrete becomes more expensive and that it is impossible to cast it in place at construction sites.

The task underlying the invention is to obtain a homogenous cellular concrete, an acceleration of the hardening of non-autoclaved cellular fibre-reinforced concrete at a natural temperature, limited by the requirements of the application of cement-containing slurries, while simultaneously enhancing the physical and mechanical properties in the initial and final hardening period; and the possibility of applying cellular fibre-reinforced concrete at construction sites according to the principle of "simply dilute with water".

The task is solved in that a raw mixture containing cement, mineral filler, microsilica, superplasticizer, fibre and a modified zeolite admixture contains a composite pore-forming agent and a hydrophobizing agent, and additionally undergoes grinding activation in mechanical activators. There is, in the following mass percentage relations:

| | |
|---|---|
| Portland cement: | 5.2-75.198% |
| Mineral filler: | 20-70% |
| Microsilica: | 2-10% |
| Superplasticizer: | 0.6-3% |
| Modified zeolite admixture: | 2-10% |
| Polypropylen fibre for concretes, up to 12 mm in length: | 0.10-0.15% |
| Composite pore-forming agent: | 0.002-0.65% |
| Hydrophobizing agent: | 0.10-1% |

The mixture applied for is diluted with water to an amount of 25-90 mass percent of the weight of the dry mixture.

**Portland cement** corresponds to the requirements of the standard DIN 1164 (Germany), BS 12 (England) or ASTM C150 (USA), Portland cement without mineral admixtures and Portland cement with active mineral admixtures. Required for the mineralogical composition: tricalcium silicate C₃S > 50%; calcium aluminate C₃A 7-10%, calcium alumoferrite C₂(A₂F) < 10%, specific surface area according to Blake 3000-4500, N₂O + K₂O < 1%.

**The mineral filler:** As mineral admixtures there are used: fly ash from coal burning, ash-slag mixtures, silica sand, lime stone, mixtures of two or more of the above admixtures. The mineral admixtures must satisfy the requirements of the valid standards or technical requirements, in particular:

The construction sands correspond to standard ASTM C 778 (USA), Standard Specification for Standard Sand, containing: SiO₂ > 75%, Fe₂O₃ < 3%, CaO < 5 %, MgO < 2%, N₂O +K₂O < 2 %, SO₃ < 3 %, Al₂O₃ < 10 %, ignition loss < 5%, chlorides < 0.05%, clay < 3 volume percent. Practically any construction sands can be used for producing heavy concrete.

The fly ash corresponds to standard ASTM C618-08a (USA) "Standard Specification for Coal Fly Ash and Raw or Calcined Natural Pozzolan for Use in Concrete" containing SiO₂ > 45%, Al₂O₃ < 10-30%, Fe₂O₃ < 10 %, CaO < 5 %, MgO < 2%, N₂O + K₂O < 2%, SO₃ < 3%, ignition loss < 5%, chlorides < 0.05% (example: ash from burning coals from Ekibastuz, Kazakstan).

The slags from the iron and steel industry and the non-ferrous metal industry corresponding to GOST 5578-94 (Russia) are rubble and sand from slags from the iron and steel industry and the non-ferrous metal industry. Slags from the iron and steel industry and from the non-ferrous metal industry are a glassy, granular material that is formed when melted blast-furnace slag is rapidly cooled down by immersing it in water. It is a non-metal product consisting of silicates and calcium alumosilicates and other compounds, obtained in molten state simultaneously with iron in a blast furnace, for instance, slags from the Nizhny Tagil Metallurgical Combine (Russia).

The carbonate varieties correspond to standard ASTM C 294-56 (USA), for instance, dolomite from the Pugachev pit in the Saratov District, Russia, with the chemical composition CaO - 31.26%, MgO - 18,61 %, SiO₂ - 3.8%, Fe₂ O₃ - 0,19%, SO₃ - 0,12%, Na₂O - 0,06%, K₂O - 0,24%, Al₂O₃ - 0,56%, ignition loss 44.19%.

**The microsilica** (silica fume) corresponding to the standards JIS A 6207 (Japan), EN 13263 and ENV 205 (EU), CAN-CSA-A23, 5-M86 (Canada) is an ultradispersed material consisting of spherically shaped particles obtained in a gas purification process of furnaces in the production of silica-containing alloys. The basic component of the material is a dioxide of amorphous modification. Microsilica is waste from metallurgical production. Example: MKU 85 from the production of OAO "Kuznetsk Ferroalloys" (Russia).

**The composite pore-forming agent** is an active pore-forming admixture, containing a combination of blowing agent and foaming agent. The blowing agent is an aluminium powder of the brands PAP-1, PAP-2 (for instance, products of the Volgograd aluminium factory, Russia, consisting of powdered aluminium particles which have a platelet shape and are covered by a thin oxide and fat film. The powder is a slightly greasing product of silvery-grey colour, which does not contain any foreign admixtures visible with the bare eye. The filling density of the powder is approximately 0.15-0.30 g/cm³, the content of active aluminium is 85-93%. The medium thickness of the flakes is approximately 0.25-0.50 µm, and the medium linear size is 20-30 µm. The filling density of the powder containing active aluminium and the medium size of the particles are not determined, neither are their derivatives.)

The foaming agent is a combination of dry foaming agents of the OSB type (manufacturer: OOO "Opytniy zavod sukhikh smesey"), the protein foaming agent "Biopor", SNV, a technical abietic resin saponified with caustic soda, and chlorine sulfanol. The novelty of the applied composite pore-forming agent lies in that a combination is applied which consists of aluminium powders of the PAP-1 and PAP-2 brands and a combination of dry foaming agents of the OSB type (manufacturer: OOO "Opytniy zavod sukhikh smesey"), the protein foaming agent "Biopor", SNV, a technical abietic resin saponified with caustic soda, and chlorine sulfanol. The pore-forming agents are preliminarily mixed in a 50/50 relation of foaming agent/blowing agent. The foaming agents form pores immediately in the process of being mixed with water, while the blowing agent is a mixture of more coarsely ground powder (PAP-1, covering power on water in cm²/g: 7000) and more finely ground powder (PAP-2, covering power on water in cm²/g: more than 10000) in a relation of 30-50/70-50% respectively; such a relation of the blowing agents makes it possible to begin the pore-forming after completion of the mixing process and the further obtainment of pores with the rise of the mixture, with gradual alternate inclusion in the blowing process-first the finer aluminium powder of the PAP-2 brand renders the blowing, and subsequently later the PAP-1 aluminium powder participates in the reaction, which makes it possible to carry out the process of obtaining pores gradually in stages according to the scheme: Foaming agent - PAP-2 - PAP-1.

**The superplasticizers** of the brands C-3 (Russia), "Mighty 100" (Japan), Sikament, Melment (Germany) are admixtures on the basis of sodium salts of condensation products of naphtalene sulfonic acid and formaldehyde, and also all existing superplasticizers and hyperplasticizers in dry form, corresponding to ASTM C-494.

**The modified zeolite admixture** consists of a combination of zeolite consisting of SiO₂ and AlO₄ tetraeders connected at their vertices to form open channels, in the hollows and channels of which there are H₂O molecules and cations. For example, the basic composition of natural zeolites originating from Sokyriany (Ukraine) in percent is: SiO₂ - 71,5; Al₂O₃ - 13,1; Fe₂O₃ - 0,9; MnO - 0,19; MgO - 1,07; CaO - 2,1; Na₂O - 2,41; K₂O - 2,96; P₂O₅ - 0,033; traces of SO₃, as microadmixtures they contain: nickel, vanadium, molybdenum, copper, tin, lead, cobalt and zinc, and multi-layered and one-layered carbon **nanotubes** obtained by chemical gas phase precipitation (catalyst pyrolysis, CVD) of gaseous hydrocarbons on catalysts (Ni/Mg) at atmospheric pressure with the characteristics: outer diameter 10-60 nm, inner diameter 10-20 nm, length 2 µm or more (for instance, multi-layered carbon nanotubes "TAUNIT" manufactured by OOO "NanoTechTsentr" of the Tambov Technical State University, Russia).

**The hydrophobizing agents** are reactants forming a transparent film on the concrete which prevents an evaporation of moisture from the cellular concrete, thus making it hydrophobic (this is particularly relevant in hot climate countries). The transparent surface film is made of the following materials: aqueous solutions of alkali soaps, solutions of resins in volatile solvents, aqueous solution of chlorine barium, organosilicon substances (GK 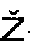 -11N), sodium oleate (Liga Natriumoleat 90 of the manufacturer "Eurochem").

### THE ABOVE LISTED CONDITIONS ARE IDEAL.

If there are some deviations, cellular fibre-reinforced concrete of good quality is possible. The final data are determined in each individual case.

The novelty lies in that a composite pore-forming agent is applied, consisting of a combination of blowing agents, namely, aluminium powders of the PAP-1 and PAP-2 brands and dry foaming agents of the OSB type (manufacturer: OOO "Opytniy zavod sukhikh smesey") the protein foaming agent "Biopor", SNV, a technical abietic resin saponified with caustic soda, and chlorine sulfanol. The pore-forming agents are preliminarily mixed in a 50/50 relation of foaming agent/blowing agent. The foaming agent is a mixture of more coarsely ground powder (PAP-1, covering power on water in cm²/g: 7000) and more finely ground powder (PAP-2, covering power on water in cm²/g: more than 10000) in a relation of 30-50/70-50% respectively; such a relation of the pore-forming agents makes it possible to begin the pore-forming while mixing and to further obtain pores with the rise of the mixture, with gradual inclusion in the pore-forming process - first the foaming agent renders a finer dispersity of the PAP-2 aluminium powder, and subsequently later the PAP-1 aluminium powder, which makes it possible to carry out the process of obtaining pores gradually in stages according to the scheme: Foaming agent - PAP-2 - PAP-1, and a hydrophobizing agent is applied, whose reactant forms a transparent film on the concrete which prevents an evaporation of moisture from the cellular concrete, thus making it hydrophobic (this is particularly relevant in hot climate countries). The transparent surface film is made of the following materials: aqueous solutions of alkali soaps, solutions of resins in volatile solvents, aqueous solution of chlorine barium, organosilicon substances (GK 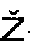 -11N), sodium oleate (Liga Natriumoleat 90 of the manufacturer "Eurochem").

A direct consequence is the change of the physical and mechanical characteristics of the thus obtained cellular concrete towards its simplification and homogeneity. The application of the composite pore-forming agent has essentially improved the process of gradual, smooth pore formation occurring more evenly with a uniform distribution of the pores, while successfully achieving an increase of practically all indicators by 35-40% compared to the indicators required by the standards and by GOST. The formation of the film on the surface with the help of the hydrophobizing agent made it possible to sharply reduce the evaporation of water from the cellular concrete, which made it possible to maintain the required amount of water in the mixture for a gradual hydration of the cement. Simultaneously, completely new properties of the cellular fibre-reinforced concrete occur, namely the creation of cellular concrete with increased strength, evenly distributed pores, obtainment of a cellular concrete with a specific weight of 200-1200 kg/m³, which makes it possible to obtain a material which significantly exceeds the requirements of the standard parameters for strength, frost-resistance, reduced water permeability and better water repulsion of the products, while the additional simultaneous grinding and activating facilitates the achievement of homogeneity of the mixture (table 1).

A significant cost economy is achieved because there is no autoclave processing and because it is possible to dispense with steam-curing and heating. The above dry mixture can be used at construction sites according to the principle of "dilute with water" in existing mechanisms and machines provided for mixing and supplying concrete mixtures and slurries at construction sites (example: the *Estrich Boy* DC260/45 concrete pump).

**Table 1**

| Component type of raw mixture and properties of cellular fibre-reinforced concrete | Component content in the raw mixture in mass % | | | | | |
|---|---|---|---|---|---|---|
| | compositions of non-autoclaved cellular fibre-reinforced concrete with composite pore-forming agent and hydrophobizing agent | | | | | |
| | 1 | 2 | 3 | 4 | 5 | 6 |
| Portland cement CEM 1 42,5 R | 50 | 50 | 50 | 60 | 60 | 60 |
| mineral filler ash sand lime stone | 44 | 39 | 38.9 | 32.9 | 29 | 28.9 |
| microsilica | - | 5 | 8 | - | 5 | 8 |
| C-3 superplasticizer | 0.6 | 0.6 | 0.7 | 0.7 | 0.6 | 0.7 |
| modified zeolite | | | | | | |
| nanoadmixture | 5 | 5 | 2 | 6 | 5 | 2 |
| polyproplyene fibre | 0.1 | 0.1 | 0.1 | 0.1 | 0.1 | 0.1 |
| composite pore-forming agent | 0.2 | 0.2 | 0.2 | 0.2 | 0.2 | 0.2 |
| hydrophobizing agent GK 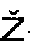 11N | 0.1 | 0.1 | 0.1 | 0.1 | 0.1 | 0.1 |
| water, weight relation to solids | 0.88 | 0.46 | 0.425 | 0.82 | 0.401 | 0.48 |
| compressive yield strength, kg/cm² | 7.6 | 33.6 | 31.1 | 6.23 | 31.6 | 36.8 |
| heat conductivity | 0.065 | 0.10 | 0.10 | 0.07 | 0.11 | 0.11 |
| frost resistance | > F50 | > F50 | >F50 | >F50 | > F50 | >F50 |
| density, kg/cm² | 304 | 510 | 490 | 285 | 512 | 540 |

## Claims

1. Dry mixture for producing cellular fibre-reinforced concrete comprising Portland cement, mineral filler, microsilica, superplasticizer, modified admixture, fibre, and composite pore-forming agent, **characterised in that** it additionally comprises a hydrophobizing agent, wherein the dry mixture has the following relation of components in mass percent:
| | |
|---|---|
| Portland cement: | 5.2-75.198 |
| Mineral filler: | 20-70 |
| Microsilica: | 2.0-10 |
| Superplasticizer: | 0.6-3.0 |
| Modified admixture: | 2.0-10 |
| Fibre (polypropylen) : | 0.1-0.15 |
| Hydrophobizing agent: | 0.10-1 |
| Composite pore-forming agent: | 0.002-0.65 |

2. Dry mixture for producing cellular fibre-reinforced concrete according to claim 1, **characterised in that** the composite pore-forming agent additionally comprises a composite blowing agent, wherein the composite pore-forming agent comprises, in mass percent:
| | |
|---|---|
| Composite blowing agent consisting of aluminium powder of the brands PAP-1 and PAP-2 | 2-52 |
| Dry foaming agent of the OSB type | 2-60 |
| Protein foaming agent "Biopor" | 2-60 |
| SNV, saponified with caustic soda | 0.1-12 |
| Technical abietic resin | 0.1-12 |
| Chlorine sulfanol | 2-45 |
The mixture of aluminium powders of the PAP-1 and PAP-2 brands are contained in the composite blowing agent in the following relation, as a percent-age:
| | |
|---|---|
| PAP-1 | 30%-50% |
| PAP-2 | 70%-50% |
